# EUROPÄISCHE PATENTSCHRIFT

(11) **EP 2 994 402 B1**
(45) Veröffentlichungstag und Bekanntmachung des Hinweises auf die Patenterteilung: **12.07.2017**
(21) Anmeldenummer: 14714619.5
(22) Anmeldetag: 20.03.2014
(51) Int. Cl.: B65G 21/20, B65G 1/137, B65G 15/16

(54) **MANIPULATOR**
MANIPULATOR
MANIPULATEUR

(30) Priorität: 08.05.2013 DE 102013208561
(43) Veröffentlichungstag der Anmeldung: 16.03.2016
(73) Patentinhaber: Gebr. Willach GmbH, 53809 Ruppichteroth (DE)
(72) Erfinder: WILLACH, Jens, 53783 Eitorf (DE); MÜLLER, Hans-Friedrich, 53809 Ruppichteroth (DE)
(74) Vertreter: dompatent von Kreisler Selting Werner - Partnerschaft von Patent- und Rechtsanwälten mbB
(86) Internationale Anmeldenummer: PCT/EP2014/055592
(87) Internationale Veröffentlichungsnummer: WO 2014/180594

(56) Entgegenhaltungen:
- EP-A1- 0 556 497
- DE-A1- 3 609 786
- US-A- 5 772 392
- US-A1- 2006 157 321

## Beschreibung

Die vorliegende Erfindung betrifft einen Manipulator für ein Lager mit Lagerflächen, auf denen Gegenstände in einer Reihe anordenbar sind.

Es ist bekannt, dass Lagerflächen, wie beispielsweise Kanallager mit Lagerkanälen, über einen Manipulator befüllt werden. Dabei wird das Eingabeende der Lagerfläche von dem Manipulator angefahren und die Gegenstände werden an die Lagerplätze übergeben. Derartige Lager werden häufig für Waren eingesetzt. Besonders geeignet für schnelldrehende Waren sind Schrägfachbodenregale, bei denen die einzelnen Waren in Kanälen, die durch seitliche Begrenzungen getrennt sind, auf einer Schrägfläche enthalten sind. Bei einer Entnahme eines unteren Gegenstandes rutschen die übrigen Gegenstände nach. In der Regel sind in jedem Kanal gleichartige Gegenstände enthalten. Die Gegenstände weisen generell quaderförmige Packungen auf, wobei Packungen gleichen Formats in einen Kanal eingebracht werden, dessen Kanalbreite auf die Packungsgröße abgestimmt ist. Auf derartigen Lagerflächen können jedoch auch Waren unterschiedlicher Formen, z.B. Zylinder, und unterschiedlichen Formats innerhalb desselben Kanals gespeichert werden.

Bekannte Manipulatoren weisen eine schräge Tragfläche auf, auf denen eingelagerte Gegenstände liegen. Am Ausgabeende der Tragfläche ist ein Stopper angeordnet, der verhindert, dass die Gegenstände unkontrolliert von der Tragfläche rutschen. Nach Erreichen des gewünschten Lagerplatzes wird der Stopper automatisch entfernt, so dass die Gegenstände in den gewünschten Lagerkanal oder in die gewünschte Reihe rutschen können.

Der Manipulator nimmt die einzuordnenden Gegenstände an einer Übergabestation auf, an der die Gegenstände automatisch oder manuell von einem Bediener auf die Tragfläche des Manipulators verbracht werden. Dazu dient zumeist eine Einfüllfläche, von der die Gegenstände auf die Tragfläche des Manipulators rutschen. Der erste Gegenstand, der auf die Tragfläche verbracht wird, wird dabei von dem Stopper gehalten. Die nachfolgenden Gegenstände reihen sich hintereinander an. Insbesondere sehr schwere Packungen erreichen beim Einfüllen teilweise relativ hohe Geschwindigkeiten, so dass es beim Aufprall auf den vorangegangenen Gegenstand dazu kommen kann, dass sich die Gegenstände verschieben und dadurch auf der Tragfläche verkanten. In einer Umgebung mit hoher Luftfeuchtigkeit kann es ferner vorkommen, dass die Gegenstände auf der Tragfläche haften bleiben. Dadurch kann eine Übergabe der Gegenstände von dem Manipulator auf die Lagerfläche verhindert werden und es bedarf eines Eingreifens des Bedieners. Die vorbekannten Manipulatoren werden häufig auch in Lagerautomaten eingesetzt, bei denen mittels Sensoren die Füllstände der Lagerplätze überwacht werden. Bei derartigen Lagerautomaten kann es jedoch zu Fehlfunktionen kommen, wobei die Anzahl der Gegenstände auf der Tragfläche des Manipulators zu groß ist, so dass nicht sämtliche auf dem Manipulator angeordnete Gegenstände in den entsprechenden Lagerplatz passen. Bei den vorbekannten Manipulatoren, bei denen die Gegenstände schwerkraftbedingt auf den Lagerplatz rutschen, kann nun das Problem entstehen, dass einer der Gegenstände an der Übergabestelle zwischen Manipulator und dem Lagerplatz aufgrund der Überfüllung des Lagerplatzes stecken bleibt, so dass der Manipulator nicht weiterbewegt werden kann. Auch bei dieser Fehlfunktion bedarf es eines Eingreifens des Bedieners.

Es ist daher die Aufgabe der vorliegenden Erfindung, einen Manipulator für ein Lager mit mindestens einer Lagerfläche zu schaffen, bei der die zuvor beschriebenen Fehlfunktionen vermieden werden oder automatisch behoben werden können.

Die Erfindung ist definiert durch die Merkmale des Anspruchs 1.

Über den erfindungsgemäßen Manipulator für ein Lager mit mindestens einer Lagerfläche, auf der Gegenstände in einer Reihe anordenbar sind, ist ein Eingabeende der Lagerfläche bedienbar. Der Manipulator weist mindestens einen Tragschlitten mit einem Ausgabeende für die Gegenstände und mit einer Tragfläche zur Aufnahme der Gegenstände auf.

Der erfindungsgemäße Manipulator ist dadurch gekennzeichnet, dass der Tragschlitten ein erstes Förderband aufweist, das verstellbar und an die Gegenstände anlegbar ist, wobei über das erste Förderband die Gegenstände gegen ein an der Tragfläche angeordnetes zweites Förderband, an dem die Gegenstände anliegen, und/oder gegen eine Führungsfläche andrückbar sind.

Durch das erste Förderband, das verstellbar und an die Gegenstände anlegbar ist, erfolgt eine Führung der Gegenstände, wodurch eine geordnete Übergabe der Gegenstände an dem Ausgabeende des Tragschlittens gewährleistet werden kann.

Dadurch, dass das erste Förderband die Gegenstände gegen das zweite Förderband und/oder gegen eine Führungsfläche drückt, können die Gegenstände über das erste Förderband definiert gefördert werden, wobei die Gegenstände zwischen dem ersten Förderband und dem zweiten Förderband und/oder der Führungsfläche in der Art eines Greifers gehalten werden können. Dadurch kann erreicht werden, dass ein Gegenstand erst nachdem er fast vollständig an einen Lagerplatz übergeben worden ist, von dem ersten Förderband freigegeben wird. Durch diese Greiffunktion kann somit gewährleistet werden, dass ein Gegenstand, der nicht vollständig in einen Lagerplatz übergeben wird, und der somit an der Übergabestelle stecken zu bleiben droht, mittels des ersten Förderbandes wieder zurück auf die Tragfläche gezogen werden kann, indem das erste Förderband in Rückwärtsrichtung angetrieben wird.

Durch das Vorsehen des zweiten Förderbandes, an dem die Gegenstände anliegen, wird erreicht, dass die Gegenstände beim Rutschen auf die Tragfläche durch das Förderband abgebremst werden und mit der Geschwindigkeit des Förderbandes weitertransportiert werden. Ein undefinierter Aufprall der Gegenstände aufeinander oder an einen Anschlag, was zu einem Verkanten der Gegenstände auf der Tragfläche führen kann, wird somit verhindert.

In einem bevorzugten Ausführungsbeispiel des erfindungsgemäßen Manipulators ist vorgesehen, dass das zweite Förderband in der Tragfläche oder in der Führungsfläche angeordnet ist und zumindest einen Teil der Tragfläche bzw. Führungsfläche bildet. Ein auf die Tragfläche übergebener Gegenstand liegt somit automatisch an dem zweiten Förderband an und kann somit in vorteilhafter Weise von diesem abgebremst und gefördert werden. Bei einem Ausführungsbeispiel, bei dem das zweite Förderband in der Führungsfläche angeordnet ist, ist eine Führung der Gegenstände in vorteilhafter Weise möglich, da die Gegenstände von dem ersten Förderband an das zweite Förderband gedrückt werden.

Vorzugsweise ist vorgesehen, dass die Tragfläche die Führungsfläche bildet, und dass das erste Förderband der Tragfläche gegenüberliegend angeordnet ist. Dabei kann insbesondere vorgesehen sein, dass das erste Förderband dem zweiten Förderband gegenüberliegt. Durch das Anordnen des ersten Förderbandes der Tragfläche gegenüberliegend wird erreicht, dass von dem zweiten Förderband geförderte Gegenstände, die beispielsweise gegen einen Anschlag gefördert werden, sich nicht übereinander schieben können, sondern diese werden an ihrer Oberseite durch das erste Förderband geführt. Bei dem Ausführungsbeispiel, bei dem das erste Förderband dem zweiten Förderband gegenüberliegend angeordnet ist, kann eine Greiffunktion in besonders vorteilhafter Weise erreicht werden, indem die Gegenstände zwischen den beiden Förderbändern geführt werden und somit in vorteilhafter Weise gehalten werden können.

Dabei kann insbesondere vorgesehen sein, dass das erste Förderband schwerkraftbedingt gegen die Gegenstände drückt. Mit anderen Worten: Das erste Förderband drückt aufgrund seiner Gewichtskraft gegen die Gegenstände. Dadurch kann auch erreicht werden, dass sich der erfindungsgemäße Manipulator automatisch an unterschiedliche Größen der Gegenstände anpassen kann, indem das erste Förderband von einem größeren Gegenstand entgegen der Schwerkraft nach oben gedrückt und somit verstellt wird. Zu dem Förderband können beispielsweise Umlenkvorrichtungen, Rahmen usw. gehören, die das notwendige Gewicht bereitstellen.

In einem besonders bevorzugten Ausführungsbeispiel der Erfindung kann vorgesehen sein, dass an dem Tragschlitten eine die Tragfläche an einer Seite begrenzende erste Führungsvorrichtung angeordnet ist. Diese kann beispielsweise als Führungswand ausgebildet sein. Die erste Führungsvorrichtung kann beispielsweise auch die Führungsfläche aufweisen, so dass die Gegenstände von dem ersten Förderband an die erste Führungsvorrichtung gedrückt werden. Durch die erste Führungsvorrichtung lassen sich die auf der Tragfläche aufgenommenen und von der Tragfläche geförderten Gegenstände in besonders vorteilhafter Weise führen und es wird verhindert, dass die Gegenstände auf der Tragfläche verkanten.

An dem Tragschlitten kann ferner eine die Tragfläche an einer zweiten Seite begrenzende zweite Führungsvorrichtung angeordnet sein, wobei die zweite Führungsvorrichtung zur Einstellung der Breite der Tragfläche verschiebbar ist. Die Breite der Tragfläche ist somit mittels der zweiten Führungsvorrichtung an breitere Gegenstände anpassbar. Durch das Vorsehen der ersten und/oder zweiten Führungsvorrichtung wird die Führung der Gegenstände auf der Tragfläche in besonders vorteilhafter Weise erreicht.

Die Erfindung kann somit vorsehen, dass die auf der Tragfläche aufgenommenen und geförderten Gegenstände an mindestens drei, besonders bevorzugt an vier Seiten, geführt werden. Dies wird über die Tragfläche, das erste und gegebenenfalls das zweite Förderband und mindestens eine der Führungsvorrichtungen erreicht.

Der erfindungsgemäße Manipulator kann in verschiedenen Ausgestaltungen ausgebildet sein. Es kann beispielsweise vorgesehen sein, dass das erste und das zweite Förderband jeweils von einer Seite an den Gegenständen angreifen. An der Unterseite werden die Gegenstände bei diesem Ausführungsbeispiel von der Tragfläche geführt. Bei einer derartigen Ausgestaltung des Manipulators kann auch eine dritte, von oben an die Gegenstände anlegbare Führungsvorrichtung vorgesehen sein.

Bei dem erfindungsgemäßen Manipulator kann somit insbesondere vorgesehen sein, dass die Gegenstände bei der Aufnahme und der Förderung auf der Tragfläche von allen vier Seiten geführt werden. Dadurch wird ein Verkanten der Gegenstände auf der Tragfläche in besonders zuverlässiger Weise verhindert.

In einem besonders bevorzugten Ausführungsbeispiel der Erfindung ist vorgesehen, dass ein den Gegenständen zugewandter Trum des ersten Förderbandes in einem spitzen Winkel zu einem den Gegenständen zugewandten Trum des zweiten Förderbandes und/oder zu der Führungsfläche angeordnet ist. Dabei kann sich der den Gegenständen zugewandte Trum des ersten Förderbandes zu dem Ausgabeende hin neigen, d.h. der Trum besitzt zu dem Ausgabeende hin ein Gefälle. Zwischen dem den Gegenständen zugewandten Trum des ersten Förderbandes und dem den Gegenständen zugewandten Trum des zweiten Förderbandes bzw. der Führungsfläche wird somit ein sich zum Ausgabeende hin verjüngender Keil gebildet, wodurch erreicht wird, dass ein Gegenstand, der das Ende des ersten Förderbandes erreicht, zwischen dem ersten Förderband und dem zweiten Förderband bzw. zwischen dem ersten Förderband und der Führungsfläche in besonders vorteilhafter Weise geführt wird, da das erste Förderband nur mit einer geringen Auflagefläche gegen den Gegenstand drückt. Dadurch wird ein am Ausgabeende angelangter Gegenstand zwischen dem ersten Förderband und dem zweiten Förderband bzw. zwischen dem ersten Förderband und der Führungsfläche in der Art einer Pinzette gehalten, wodurch eine besonders definierte Führung des Gegenstandes erreicht wird. Auch ein Zurückziehen des Gegenstandes bei einer Fehlfunktion kann dadurch auf besonders vorteilhafte Weise erreicht werden. Ferner ermöglicht die Keilform, dass auch relativ große Gegenstände mittels des Manipulators verwendet werden können, ohne dass der Manipulator in aufwändiger Weise angepasst werden muss.

Es kann vorgesehen sein, dass das erste Förderband über ein erstes Drehlager verschwenkbar ist, wobei der Winkel des den Gegenständen zugewandten Trums des ersten Förderbandes veränderbar ist. Dadurch wird in vorteilhafter Weise erreicht, dass der Tragschlitten an unterschiedlich hohe Gegenstände anpassbar ist.

Eine dem Ausgabeende des Tragschlittens zugewandte Umlenkvorrichtung des ersten Förderbandes kann ferner über ein Linearlager translatorisch geführt sein, wobei das erste Drehlager über einen verschwenkbaren Lagerbock und ein zweites Drehlager an dem Tragschlitten befestigt ist. Durch eine derartige Lagerung des ersten Förderbandes können die gewünschten Funktionen Fördern, Führen und Greifen der Gegenstände durch den erfindungsgemäßen Tragschlitten in besonders vorteilhafter Weise erreicht werden, wobei eine Anpassung an unterschiedlich große Gegenstände ermöglicht wird.

In einem besonders bevorzugten Ausführungsbeispiel der Erfindung ist vorgesehen, dass das erste und das zweite Förderband einen gemeinsamen Antrieb aufweisen. Dabei kann insbesondere vorgesehen sein, dass das erste und das zweite Förderband mit der gleichen Geschwindigkeit antreibbar sind. Durch einen gemeinsamen Antrieb kann insbesondere gewährleistet werden, dass das erste und das zweite Förderband eine gleiche Geschwindigkeit besitzen.

Selbstverständlich ist es auch möglich, dass nur eines der Förderbänder angetrieben wird, wohingegen das andere Förderband passiv durch die anliegenden Gegenstände bewegt wird.

Der gemeinsame Antrieb ermöglicht ferner in besonders vorteilhafter Weise ein Fördern der Gegenstände entgegen der Hauptförderrichtung der Gegenstände, da gewährleistet wird, dass bei einem Rückwärtslauf eines der Förderbänder das andere Förderband automatisch ebenfalls in Rückwärtsrichtung angetrieben wird.

Die Tragfläche des Tragschlittens kann in einem Winkel zur Horizontalen und zu dem Ausgabeende des Tragschlittens hin geneigt angeordnet sein. Der Winkel kann beispielsweise veränderbar sein. Der erfindungsgemäße Manipulator kann insbesondere in Verbindung mit einem Lager, das ein oder mehrere schräge Lagerflächen aufweist, verwendet werden. Dabei kann insbesondere vorgesehen sein, dass der Winkel der Tragfläche des Manipulators an den Winkel der Lagerflächen angepasst ist bzw. diesem Winkel entspricht. Durch das Vorsehen einer geneigten Tragfläche ist die Förderung der Gegenstände in besonders vorteilhafter Weise möglich, da die Förderung der Gegenstände durch die Schwerkraft unterstützt wird. Darüber hinaus kann gewährleistet werden, dass eine Übergabe der Gegenstände von der Tragfläche auf die Lagerfläche in vorteilhafter Weise, beispielsweise ohne Kippen oder Verkanten, erfolgt.

In einem besonders bevorzugten Ausführungsbeispiel der Erfindung ist vorgesehen, dass ein schaltbarer Anschlag an der dem Ausgabeende des Tragschlittens zugwandten Seite der Tragfläche angeordnet ist. Der schaltbare Anschlag wirkt somit als Stopper für die Gegenstände. Durch die schaltbare Ausführung des Anschlages kann der Anschlag entfernt werden, so dass die Gegenstände ungehindert von der Tragfläche übergeben werden können. Der Anschlag kann beispielsweise von der Tragfläche versenkt angeordnet sein und durch eine Schaltung aus dieser herausragen. Durch den Anschlag kann ferner erreicht werden, dass beim Befüllen des Manipulators entstehende Lücken zwischen den Gegenständen geschlossen werden, indem beispielsweise das zweite Förderband die Gegenstände definiert gegen den Anschlag führt und zusammenrückt.

Der den Gegenständen zugewandte Trum des ersten Förderbandes kann beispielsweise elastisch ausgebildet sein. Dadurch wird erreicht, dass ein, beispielsweise durch eine Fehlbedienung, auf die Tragfläche übergebener, zu großer Gegenstand nicht unmittelbar dazu führt, dass das erste Förderband nicht mehr an anderen Gegenständen anliegt. Der zu große Gegenstand drückt zunächst nur gegen den dem Gegenstand zugewandten Trum und verformt diesen elastisch. Erst wenn der Gegenstand einen zu großen Größenunterschied gegenüber den anderen Gegenständen aufweist, wird durch den zu großen Gegenstand das erste Förderband von den übrigen Gegenständen weggedrückt. Dies ist insbesondere dann von Vorteil, wenn ein Gegenstand zwei Kantenlängen mit ähnlichen Abmessungen aufweist, so dass es bei dem manuellen Einfüllen der Gegenstände schnell zu einer Verwechslung der Ausrichtung der Gegenstände kommen kann. Durch die erfindungsgemäße Ausbildung des ersten Förderbandes wird verhindert, dass eine derartige Fehlbedienung unmittelbar zu einer Fehlfunktion des Manipulators führt.

Der erfindungsgemäße Manipulator kann mit unterschiedlichsten Lagerflächen zusammenwirken. Die Lagerflächen können Lagerflächen sein, die Gegenstände in einer Reihe aufnehmen. Auch kann vorgesehen sein, dass das Lager als Kanallager ausgebildet ist, das Lagerkanäle mit mehreren Lagerflächen aufweist. Das Lager kann Schrägfachböden aufweisen, vertikale Schächte oder Kanäle, in denen die Gegenstände unter Federspannung gehalten werden.

Der Manipulator kann auch im Rahmen eines Lagerautomaten eingesetzt werden.

Ein erfindungsgemäßer Manipulator kann auch mehrere Tragflächen aufweisen. Beispielsweise können zwei oder mehrere identische Tragschlitten nebeneinander angeordnet sein. Auf diese Weise kann eine Vielzahl von Gegenständen von dem Manipulator aufgenommen werden, so dass die Zeit, die für ein Auffüllen eines Lagers benötigt wird, deutlich reduziert werden kann.

Mittels des erfindungsgemäßen Manipulators sind darüber hinaus unterschiedliche Übergabeverfahren möglich. Beispielsweise können das erste und/oder das zweite Förderband mit einer Geschwindigkeit betrieben werden, die gleich oder höher der Gleitgeschwindigkeit eines Gegenstandes in dem Lager ist. Dadurch werden die Gegenstände in einer Reihe und schnell einander nachfolgend in das Lager eingefüllt. Bei einem langsamen Einfüllen ist die Geschwindigkeit des ersten und/oder des zweiten Förderbands geringer als die Geschwindigkeit, die ein Gegenstand auf der Lagerfläche besitzt. Dadurch können die Gegenstände vereinzelt werden. In Zusammenwirkung mit beispielsweise einem Zählwerk können somit gezielt einzelne Reihen der Gegenstände aufgefüllt werden. Bei einem langsamen Einfüllen besteht auch die Möglichkeit, dass zwischen zwei Gegenständen der schaltbare Anschlag aktiviert wird, so dass ohne Abschalten des Förderbandes bzw. der Förderbänder die Übergabe gestoppt wird. Ferner besteht die Möglichkeit, durch einen Rückwärtslauf des Förderbandes bzw. der Förderbänder einen Gegenstand, der bereits teilweise auf die Lagerfläche übergeben ist, zurückzuziehen.

Im Folgenden wird unter Bezugnahme auf die nachfolgenden Figuren die Erfindung näher erläutert.

Es zeigen:
- Figur 1: eine schematische perspektivische Ansicht eines erfindungsgemäßen Manipulators und
- Figuren 2 und 3: schematische Seitenansichten des in Fig. 1 gezeigten erfindungsgemäßen Manipulators.

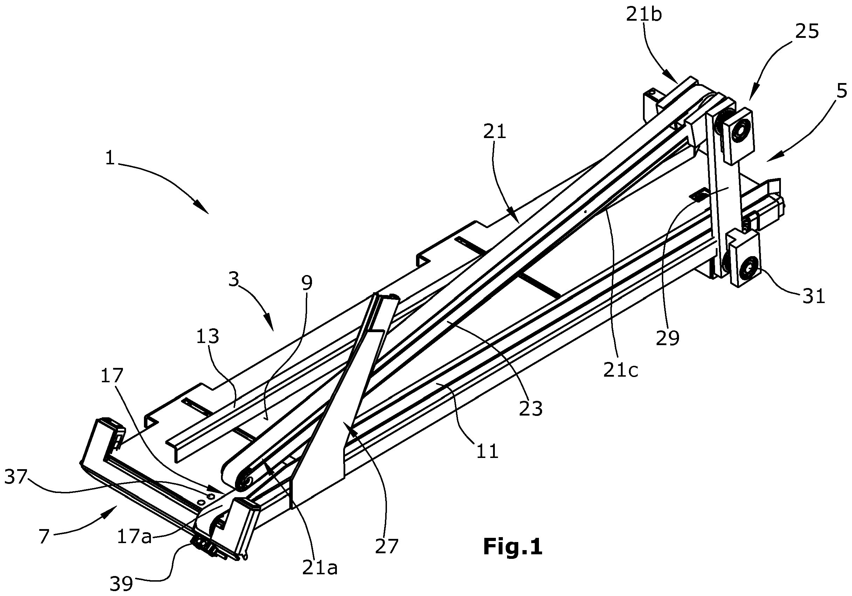

In den Figuren 1 bis 3 ist der erfindungsgemäße Manipulator 1 schematisch dargestellt.

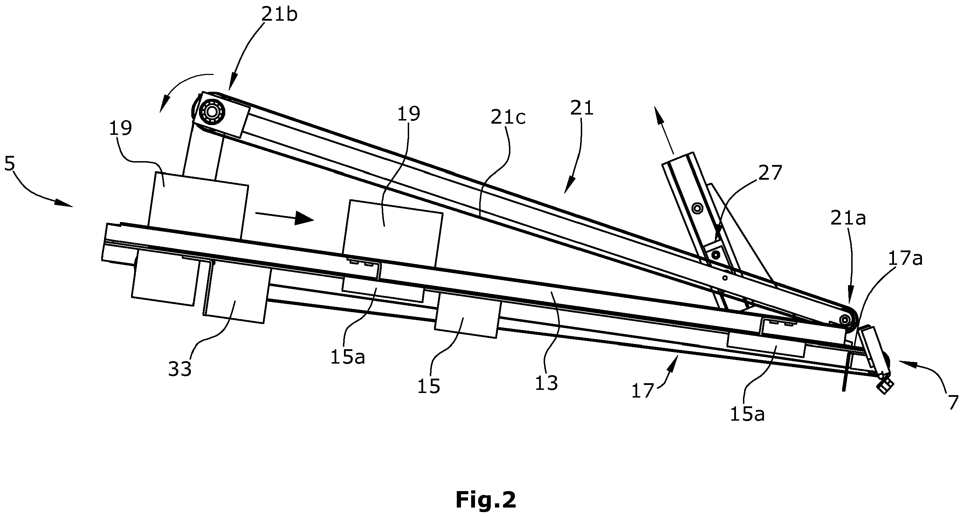

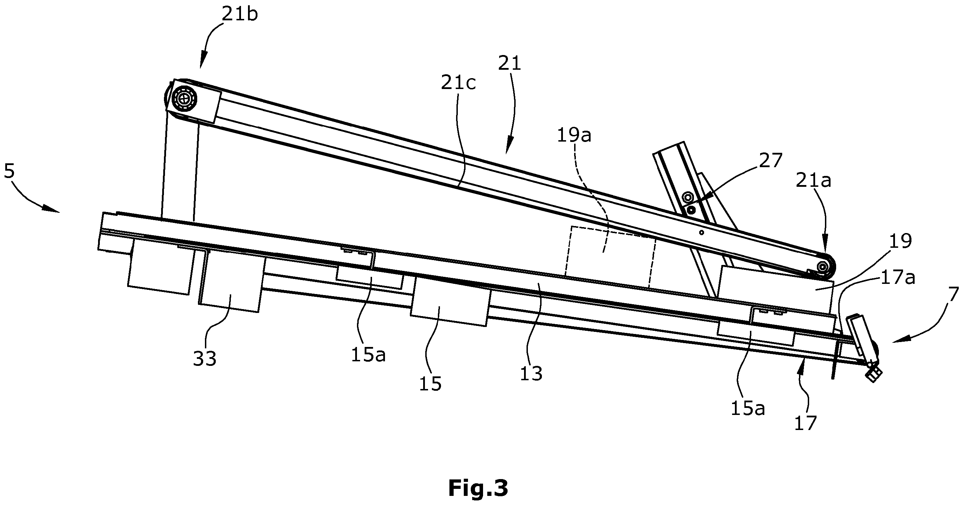

Der Manipulator 1 weist einen Tragschlitten 3 auf, der ein Eingabeende 5 und ein Ausgabeende 7 besitzt. Auf der Oberseite des Tragschlittens ist eine als Führungsfläche ausgebildete Tragfläche 9 angeordnet, die seitlich von einer ersten Führungsvorrichtung 11 begrenzt wird. An der gegenüberliegenden Seite der ersten Führungsvorrichtung 11, die beispielsweise als Führungswand ausgebildet sein kann, ist eine zweite Führungsvorrichtung 13 angeordnet, die die Tragfläche 9 an dieser Seite begrenzt. Zur Einstellung der Breite der Tragfläche 9 ist die zweite Führungsvorrichtung 13 verschiebbar ausgebildet. Wie am besten aus Fig. 2 und 3 ersichtlich ist, wird die zweite Führungsvorrichtung 13 über einen ersten Antrieb 15 angetrieben, der über Koppelvorrichtungen 15a, die in Fig. 2 lediglich schematisch dargestellt sind, mit der zweiten Führungsvorrichtung 13 verbunden sind. Über den ersten Antrieb 15 wird gewährleistet, dass bei einem Verstellen der zweiten Führungsvorrichtung 13 diese stets parallel zu der ersten Führungsvorrichtung 11 angeordnet ist.

Oberhalb der Tragfläche 9 ist ein erstes Förderband 21 angeordnet.

An der Tragfläche 9 ist ein zweites Förderband 17 angeordnet, das einen Teil der Tragfläche 9 bildet.

Mittels des Manipulators 1 lassen sich Gegenstände 19 auf eine Lagerfläche eines nicht dargestellten Lagers übertragen, wodurch das Lager aufgefüllt werden kann. Dazu werden die Gegenstände von dem Eingabeende 5 auf den Manipulator 1 verbracht, wobei die Tragfläche 9 die Gegenstände 19 aufnimmt und fördert. Die Tragfläche 9 kann beispielsweise in einem Winkel zur Horizontalen und zu dem Ausgabeende 7 hin geneigt angeordnet sein. Eine nicht dargestellte Einfüllstation für den Manipulator 1 weist beispielsweise den gleichen Winkel auf. Dadurch rutschen die Gegenstände 19 mit einer relativ hohen Geschwindigkeit auf die Tragfläche 9. Das zweite Förderband 17 bremst die Gegenstände 19 ab und fördert diese mit einer definierten Geschwindigkeit über die Tragfläche 9.

Mittels der zweiten Führungsvorrichtung 13 lässt sich die Breite der Tragfläche 9 an die Breite der Gegenstände 19 anpassen.

Das zweite Förderband 17, das sich vorzugsweise von dem Eingabeende 5 bis zu dem Ausgabeende 7 des Tragschlittens 3 erstreckt, ist an einem seitlichen Bereich der Tragfläche 9 angeordnet, benachbart zu der ersten Führungsvorrichtung 11. Dadurch wird gewährleistet, dass bei unterschiedlicher Einstellung der Breite der Tragfläche 9 die Gegenstände 19 immer an dem zweiten Förderband 17 anliegen.

Das erste Förderband 21 ist oberhalb der Tragfläche 9 und des zweiten Förderbands 17 angeordnet und liegt dem zweiten Förderband 17 gegenüber. Das erste Förderband 21 weist einen Rahmen 23 auf, über den das erste Förderband 21 an einem ersten Drehlager 25 gelagert ist. Eine dem Ausgabeende des Tragschlittens 7 zugewandte Umlenkvorrichtung 21a des ersten Förderbandes 21 ist mittels des Rahmens 23 in einem Linearlager 27 translatorisch geführt. Das erste Drehlager 25 ist ferner über einen Lagerbock 29 und ein zweites Drehlager 31 an dem Tragschlitten 3 befestigt. Die Drehachse des ersten Drehlagers 25 fluchtet dabei mit der Drehachse einer zweiten Umlenkeinrichtung 21b des ersten Förderbandes 21.

Das erste Förderband 21 ist derart an dem Tragschlitten 3 angeordnet, dass der den Gegenständen zugewandte Trum 21c in Richtung des Ausgabeendes 7 geneigt ist und einen spitzen Winkel zu dem den Gegenständen zugewandten Trum 17a des zweiten Förderbandes 17 bildet. Das erste und das zweite Förderband 17, 21 bilden somit eine Art Keilform. Die Gegenstände 19, die über das Eingabeende 5 auf die Tragfläche 9 aufgegeben werden und mittels des zweiten Förderbandes 17 transportiert werden, drücken von unten gegen den Trum 21c des ersten Förderbandes 21. Dieser verformt sich elastisch und das erste Förderband 21 wird nach oben verschwenkt. Die Verschwenkbewegung, die durch das erste Drehlager 25, das zweite Drehlager 31 und das Linearlager 27 vorgegeben wird, ist in Fig. 2 durch Pfeile angedeutet. Durch die Schwerkraft drückt das erste Förderband 21 die Gegenstände 19 gegen das zweite Förderband 17 und die Tragfläche 9.

Das zweite Förderband 17 und das erste Förderband 21 werden über einen gemeinsamen zweiten Antrieb 33 mit gleicher Geschwindigkeit angetrieben. In Fig. 2 sind zwei Gegenstände 19 schematisch zur Verdeutlichung der Transportbewegung dargestellt.

Bei Erreichen des Ausgabeendes 7 des Tragschlittens 3 liegt das erste Förderband 21 nur noch mit einer kleinen Auflagefläche auf dem Gegenstand 19 auf, so dass dieser pinzettenartig von dem Tragschlitten 3 gegriffen wird. Dadurch wird eine Führung des Gegenstandes 19 auf besonders vorteilhafte Weise erreicht. Durch die kleine Auflagefläche entsteht ferner eine starke Haftung zwischen dem ersten Förderband 21 und dem Gegenstand 19. Dadurch wird ermöglicht, dass, solange das erste Förderband 21 auf dem Gegenstand 19 aufliegt, dieser noch durch einen Antrieb des ersten und zweiten Förderbandes 17, 21 in Rückwärtsrichtung auf die Tragfläche 9 zurückgezogen werden kann. Ein bereits auf die Lagerfläche eines Lagers teilweise übergebener Gegenstand 19, auf dem das erste Förderband 21 nur aufliegt, kann somit wieder von der Lagerfläche heruntergezogen werden.

Wie in Fig. 3 schematisch dargestellt ist, ermöglicht die keilförmige Anordnung des ersten Förderbands 21 mit der Tragfläche 9 und dem zweiten Förderband 17, das zweite Gegenstände 19a, deren Abmessungen größer als die der Gegenstände 19 sind, und die fälschlicherweise auf den Manipulator 1 verbracht werden, nicht unmittelbar zu einer Fehlfunktion führen, da diese zunächst nur gegen den Trum 21c drücken und diesen elastisch verformen und nicht unmittelbar ein Anheben des ersten Förderbandes 21 hervorrufen. Der sich am Ausgabeende 7 befindliche Gegenstand 19 wird somit weiterhin von dem Tragschlitten gehalten.

In der Tragfläche 9 kann ferner ein schaltbarer Anschlag 37 angeordnet sein, gegen den die auf den Manipulator verbrachten Gegenstände 19 anfahren können, und der verhindert, dass die Gegenstände während des Befüllens des Manipulators 1 aus dem Ausgabeende herausbefördert werden. Der Anschlag kann beispielsweise in der Tragfläche 9 versenkbar angeordnet sein. Am Ausgabeende ist ferner eine Zielvorrichtung 39 angeordnet, die einen optischen Sensor umfasst und der die von dem Manipulator übergebenen Gegenstände 19 zählt. Eine vergleichbare Zähleinrichtung kann auch am Eingabeende 5 angeordnet sein.

## Patentansprüche

1. Manipulator (1) für ein Lager mit mindestens einer Lagerfläche auf der Gegenstände (19) in einer Reihe anordenbar sind, wobei über den Manipulator (1) ein Eingabeende (5) der Lagerfläche bedienbar ist, indem das Eingabeende (5) angefahren und Gegenstände (19) an die Lagerfläche übergeben werden,
mit mindestens einem Tragschlitten (3) mit einem Ausgabeende (7) für die Gegenstände (19) und mit einer Tragfläche (9) zur Aufnahme der Gegenstände (19),
**dadurch gekennzeichnet, dass**
der Tragschlitten (3) ein erstes Förderband (21) aufweist, das verstellbar und an die Gegenstände (19) anlegbar ist, wobei über das erste Förderband (21) die Gegenstände (19) gegen ein an der Tragfläche (9) angeordnetes zweites Förderband (17), an dem die Gegenstände (19) anliegen, und/oder gegen eine Führungsfläche andrückbar sind.

2. Manipulator nach Anspruch 1, **dadurch gekennzeichnet, dass** das zweite Förderband (17) in der Tragfläche (9) angeordnet ist und zumindest einen Teil der Tragfläche (9) bildet.

3. Manipulator nach Anspruch 1 oder 2, **dadurch gekennzeichnet, dass** die Tragfläche (9) die Führungsfläche bildet, und dass das erste Förderband (21) der Tragfläche (9) gegenüber liegend angeordnet ist.

4. Manipulator nach Anspruch 3, **dadurch gekennzeichnet, dass** das erste Förderband (21) schwerkraftbedingt gegen die Gegenstände (19) drückt.

5. Manipulator nach einem der Ansprüche 1 bis 4, **dadurch gekennzeichnet, dass** an dem Tragschlitten (3) eine die Tragfläche (9) an einer ersten Seite begrenzende erste Führungsvorrichtung (11) angeordnet ist.

6. Manipulator nach Anspruch 5, **dadurch gekennzeichnet, dass** die erste Führungsvorrichtung (11) als Führungswand ausgebildet ist.

7. Manipulator nach einem der Ansprüche 1 bis 6, **dadurch gekennzeichnet, dass** an dem Tragschlitten (3) eine die Tragfläche (9) an einer zweiten Seite begrenzende zweite Führungsvorrichtung (13) angeordnet ist, wobei die zweite Führungsvorrichtung (13) zur Einstellung der Breite der Tragfläche (9) verschiebbar ist.

8. Manipulator nach einem der Ansprüche 1 bis 7, **dadurch gekennzeichnet, dass** ein den Gegenständen (19) zugewandter Trum (21c) des ersten Förderbands (21) in einem spitzen Winkel zu einem den Gegenständen (19) zugewandten Trum (17a) des zweiten Förderbands (17) und/oder zu der Führungsfläche angeordnet ist.

9. Manipulator nach Anspruch 8, **dadurch gekennzeichnet, dass** das erste Förderband (21) über ein erstes Drehlager (25) verschwenkbar ist, wobei der Winkel des den Gegenständen (19) zugewandten Trums (21c) des ersten Förderbands (21) veränderbar ist.

10. Manipulator nach Anspruch 9, **dadurch gekennzeichnet, dass** eine dem Ausgabeende (7) des Tragschlittens (3) zugewandte Umlenkvorrichtung (21a) des ersten Förderbandes (21) über ein Linearlager (27) translatorisch geführt ist, wobei das erste Drehlager (25) über einen verschwenkbaren Lagerbock (29) und ein zweites Drehlager (31) an dem Tragschlitten (3) befestigt ist.

11. Manipulator nach einem der Ansprüche 1 bis 10, **dadurch gekennzeichnet, dass** erstes und zweites Förderband (17, 21) einen gemeinsamen Antrieb (33) aufweisen.

12. Manipulator nach einem der Ansprüche 1 bis 11, **dadurch gekennzeichnet, dass** die Tragfläche (9) in einem Winkel zur Horizontalen und zu dem Ausgabeende (7) des Tragschlitten (3) hin geneigt angeordnet ist.

13. Manipulator nach einem der Ansprüche 1 bis 12, **dadurch gekennzeichnet, dass** ein schaltbarer Anschlag (37) an dem dem Ausgabeende (7) des Tragschlittens (3) zugewandten Ende der Tragfläche (9) angeordnet ist.

14. Manipulator nach einem der Ansprüche 8 bis 13, **dadurch gekennzeichnet, dass** der den Gegenständen (19) zugewandte Trum (21c) des ersten Förderbands (21) elastisch ausgebildet ist.

## Claims

1. A manipulator (1) for a storage system, comprising at least one storage surface on which articles (19) can be arranged in a row, the manipulator (1) being adapted to serve an input end (5) of the storage surface in that the input end (5) is approached and articles (19) are transferred to the storage surface,
said manipulator comprising at least one support carriage (3) having an discharge end (7) for the articles (19), and having a support surface (9) for accommodating the articles (19),
**characterized in that**
the support carriage (3) comprises a first conveying belt (21) which is adjustable and can be positioned against the articles (19), wherein the first conveying belt is adapted to push the articles (19) against a second conveying belt (17) arranged on the support surface (9) and adapted to have the articles (19) arranged in abutment on it, and/or against a guide surface.

2. The manipulator according to claim 1, **characterized in that** the second conveying belt (17) is arranged in the support surface (9) and forms at least a part of the support surface (9).

3. The manipulator according to claim 1 or 2, **characterized in that** the support surface (9) forms said guide surface and that the first conveying belt (21) is arranged opposite to the support surface (9).

4. The manipulator according to claim 3, **characterized in that** the first conveying belt (21) presses against the articles (19) under the effect of gravity.

5. The manipulator according to any one of claims 1 to 4, **characterized in that**, on the support carriage (3), a first guide device (11) is arranged which delimits the support surface (9) on a first side.

6. The manipulator according to claim 5, **characterized in that** said first guide device (11) is designed as a guide wall.

7. The manipulator according to any one of claims 1 to 6, **characterized in that**, on the support carriage (3), a second guide device (13) is arranged for delimiting the support surface (9) on a second side, said second guide device (13) being displaceable for setting the width of the support surface (9).

8. The manipulator according to any one of claims 1 to 7, **characterized in that** a strand (21c) of the first conveying belt (21) facing toward the articles (19) is arranged at an acute angle to a strand (17a) of the second conveying belt (17) facing toward the articles (19), and/or to the guiding surface.

9. The manipulator according to claim 8, **characterized in that** the first conveying belt (21) is pivotable via a first pivot bearing (25) wherein the angle of the strand (21c) of the first conveying belt (21) facing toward the articles (19) is variable.

10. The manipulator according to claim 9, **characterized in that** a deflection device (21a) of the first conveying belt (21) facing toward the discharge end (7) of the support carriage (3) is guided in a translational manner via a linear bearing (27), wherein the first pivot bearing (25) is connected to the support carriage (3) via a pivotable bearing block (29) and a second pivot bearing (31).

11. The manipulator according to any one of claims 1 to 10, **characterized in that** the first and the second conveying belt (17,21) have a common drive unit (33).

12. The manipulator according to any one of claims 1 to 11, **characterized in that** the support surface (9) is arranged at an angle to the horizontal line and to the discharge end (7) of the support carriage (3).

13. The manipulator according to any one of claims 1 to 12, **characterized in that** a switchable stopper (37) is arranged at the end of the support surface (9) facing toward the discharge end (7) of the support carriage (3).

14. The manipulator according to any one of claims 8 to 13, **characterized in that** the strand (21c) of the first conveying belt (21) facing toward the articles (19) is elastic.

## Revendications

1. Manipulateur (1) pour un dépôt avec au moins une aire de dépôt sur laquelle des objets (19) peuvent être disposés en une ligne, une extrémité d'entrée (5) de l'aire de dépôt pouvant être actionnée à l'aide du manipulateur (1) en approchant l'extrémité d'entrée (5) et en transférant des objets (19) à l'aire de dépôt, avec au moins un chariot porteur (3) avec une extrémité de sortie (7) pour les objets (19) et avec une surface support (9) pour recevoir les objets (19),
**caractérisé en ce que** le chariot porteur (3) comprend une première bande transporteuse (21) qui est réglable et qui peut être mise en appui sur les objets (19), les objets (19) pouvant être mis en appui sur une seconde bande transporteuse (17) disposée sur la surface support (9), sur laquelle bande les objets (19) sont en appui, et/ou sur une surface de guidage.

2. Manipulateur selon la revendication 1, **caractérisé en ce que** la seconde bande transporteuse (17) est disposée dans la surface support (9) et forme au moins une partie de la surface support (9).

3. Manipulateur selon la revendication 1 ou 2, **caractérisé en ce que** la surface support (9) forme la surface de guidage et **en ce que** la première bande transporteuse (21) est disposée en regard de la surface support (9).

4. Manipulateur selon la revendication 3, **caractérisé en ce que** la première bande transporteuse (21) est en appui par gravité sur les objets (19).

5. Manipulateur selon l'une des revendications 1 à 4, **caractérisé en ce qu'**un premier dispositif de guidage (11) limitant la surface support (9) sur un premier côté est disposé au chariot porteur (3).

6. Manipulateur selon la revendication 5, **caractérisé en ce que** le premier dispositif de guidage (11) est configuré comme paroi de guidage.

7. Manipulateur selon l'une des revendications 1 à 6, **caractérisé en ce qu'**un deuxième dispositif de guidage (13) limitant la surface support (9) sur un deuxième côté est disposé au chariot porteur (3), le deuxième dispositif de guidage (13) étant déplaçable pour le réglage de la largeur de la surface support (9).

8. Manipulateur selon l'une des revendications 1 à 7, **caractérisé en ce qu'**un brin (21c) de la première bande transporteuse (21), orienté vers les objets (19), est disposé sous un angle aigu par rapport à un brin (17a) de la seconde bande transporteuse (17), orienté vers les objets (19) et/ou par rapport à la surface de guidage.

9. Manipulateur selon la revendication 8, **caractérisé en ce que** la première bande transporteuse (21) est orientable par pivotement sur un premier palier rotatif (25), l'angle du brin (21c) de la première bande transporteuse (21), orienté vers les objets (19), étant variable.

10. Manipulateur selon la revendication 9, **caractérisé en ce qu'**un dispositif de réorientation (21a) de la première bande transporteuse (21) orienté vers l'extrémité de sortie (7) du chariot porteur (3) est guidé en translation sur un palier linéaire (27), le premier palier rotatif (25) étant fixé par le biais d'un bloc d'articulation pivotant (29) et **en ce qu'**un deuxième palier rotatif (31) est fixé sur le chariot porteur (3).

11. Manipulateur selon l'une des revendications 1 à 10, **caractérisé en ce que** la première et la deuxième bandes transporteuses (17, 21) comprennent un entraînement commun (33).

12. Manipulateur selon l'une des revendications 1 à 11, **caractérisé en ce que** la surface support (9) est disposée sous un angle par rapport à l'horizontale et de façon inclinée vers l'extrémité de sortie (7) du chariot porteur (3).

13. Manipulateur selon l'une des revendications 1 à 12, **caractérisé en ce qu'**une butée à commande (37) est disposée à l'extrémité de la surface support (9) en regard de l'extrémité de sortie (7) du chariot porteur (3).

14. Manipulateur selon l'une des revendications 8 à 13, **caractérisé en ce que** le brin (21c) de la première bande transporteuse (21) orienté vers les objets (19) est formé de façon élastique.
